# FASCICULE DE BREVET EUROPEEN

(11) **EP 3 668 740 B1**
(45) Date de publication et mention de la délivrance du brevet: **03.11.2021**
(21) Numéro de dépôt: 18734113.6
(22) Date de dépôt: 11.06.2018
(51) Int. Cl.: B60K 11/06, B60K 11/08, F01P 7/10, F28D 1/02, B60K 11/04

(54) **DISPOSITIF DE VENTILATION POUR VEHICULE AUTOMOBILE**
VENTILATIONSVORRICHTUNG FÜR EIN KRAFTFAHRZEUG
VENTILATION DEVICE FOR A MOTOR VEHICLE

(30) Priorité: 12.06.2017 FR 1755243
(43) Date de publication de la demande: 24.06.2020
(73) Titulaire: Valeo Systemes Thermiques, 78322 Le Mesnil Saint-Denis Cedex (FR)
(72) Inventeur: AZZOUZ, Kamel, 78322 Le Mesnil Saint Denis Cedex (FR); LISSNER, Michael, 78322 Le Mesnil Saint Denis Cedex (FR); GARNIER, Sebastien, 78322 Le Mesnil Saint Denis Cedex (FR); TISSOT, Julien, 78322 Le Mesnil Saint Denis Cedex (FR); MAMMERI, Amrid, 78322 Le Mesnil Saint Denis Cedex (FR)
(86) Numéro de dépôt international: PCT/EP2018/065369
(87) Numéro de publication internationale: WO 2018/229000

(56) Documents cités:
- WO-A1-2011/009212
- DE-A1- 10 228 422
- GB-A- 2 534 656
- JP-A- 2010 089 523
- JP-A- 2015 001 155
- US-A- 4 516 406

## Description

La présente invention concerne un dispositif de ventilation pour un véhicule automobile.

La face avant d'un véhicule automobile comporte généralement un groupe moto-ventilateur muni d'échangeurs de chaleur. Un échangeur de chaleur comprend habituellement des tubes acheminant un fluide caloporteur, et des éléments d'échangeur de chaleur, dits « ailettes » ou « intercalaires », reliés à ces tubes et qui permettent d'augmenter la surface d'échange entre les tubes et l'air ambiant.

Afin d'augmenter l'échange de chaleur entre le fluide caloporteur et l'air ambiant, il est très fréquent qu'une hélice soit utilisée pour générer un flux d'air dirigé vers les tubes et les ailettes. Toutefois, les moyens de motorisation d'une telle hélice consomment généralement beaucoup d'énergie. De plus, le flux d'air généré par les pales étant circulaire, l'échange de chaleur ne se fait pas de façon homogène sur toute la surface des tubes et des ailettes. En outre, lorsque la mise en marche du dispositif de ventilation ne s'avère pas nécessaire, notamment lorsque l'échange de chaleur avec de l'air ambiant non accéléré suffit à refroidir le fluide caloporteur, les pales obstruent l'écoulement de l'air ambiant vers les tubes et les ailettes, ce qui limite l'échange de chaleur. Enfin, pour des questions de gestion thermique, il peut être avantageux, au contraire, de pouvoir limiter l'échange thermique entre les tubes et l'air ambiant.

Le document JP 2015 001155 A montre aussi un dispositif de ventilation destiné à générer un flux d'air en direction d'un échangeur de chaleur de véhicule automobile, comprenant des conduits espacés les uns des autres, au moins un collecteur d'air comportant des orifices, chaque conduit débouchant par une de ses extrémités dans un orifice distinct du collecteur d'air, chaque conduit étant muni d'au moins une ouverture pour éjecter un flux d'air traversant ledit conduit.

L'invention a pour but de remédier à ces inconvénients.

A cet effet, l'invention se rapporte à un dispositif de ventilation destiné à générer un flux d'air en direction d'un échangeur de chaleur de véhicule automobile, comprenant des tubes espacés, appelés tubes aérodynamiques, au moins un collecteur comportant des orifices, chaque tube débouchant par une de ses extrémités dans un orifice distinct du collecteur, chaque tube aérodynamique étant muni d'au moins une ouverture distincte de ses extrémités et située à l'extérieur du collecteur, ledit dispositif de ventilation étant caractérisé en ce qu'au moins un tube aérodynamique étant monté orientable entre une position fermée et une position ouverte, le dispositif étant configuré pour laisser passer plus d'air dans la position ouverte que dans la position fermée.

Le dispositif de ventilation selon l'invention apporte avantageusement une fonction d'obturation d'arrivée d'air et une fonction de ventilation des échangeurs dans un espace compact permettant une meilleure gestion thermique d'un véhicule automobile. Avantageusement selon l'invention, le dispositif permet d'ajuster le débit d'air traversant chaque entrée d'air dans laquelle le dispositif est monté et qui arrive aux échangeurs de chaleur, selon l'orientation du ou des conduit(s) orientables. Il est ainsi possible d'optimiser la gestion thermique de ces échangeurs de chaleur en fonction des besoins comme mieux expliqué ci-dessous.

En outre, à capacités d'échange de chaleur égales, le volume occupé par un dispositif de ventilation selon l'invention est moindre qu'un dispositif de ventilation à hélice classique. Par ailleurs, toujours à capacités d'échange de chaleur égales, le débit d'air soufflé requis avec un dispositif de ventilation selon l'invention est moindre qu'avec un dispositif de ventilation à hélice classique.

Enfin, on comprend immédiatement que le dispositif permet avantageusement de proposer un écoulement homogène grâce auxdits conduits, contrairement à une hélice dont les pales génèrent un écoulement circulaire, et de ne pas bloquer, en position ouverte du ou des conduits, l'écoulement de l'air ambiant vers les tubes et les ailettes de l'échangeur de chaleur lorsque le dispositif de ventilation est éteint, contrairement à une hélice dont les pales immobiles limitent le débit d'air vers l'échangeur et donc l'échange de chaleur avec celui-ci.

Selon d'autres caractéristiques optionnelles de réalisation de l'invention :
- au moins deux conduits sont montés orientables et sont configurés pour être passés en position fermée et en position ouverte indépendamment l'un de l'autre,
- tous les conduits sont montés orientables,
- les conduits sont positionnés les uns relativement aux autres de sorte à bloquer un flux d'air en position fermée, et de sorte à laisser circuler un flux d'air en position ouverte,
- les conduits sont des tubes sensiblement rectilignes, parallèles entre eux et alignés de manière à former une rangée de tubes,
- des moyens de commande d'orientation de chaque conduit orientable,
- les moyens de commande comprennent un actionneur et/ou une tringlerie,
- chaque conduit présente une section comprenant un bord d'attaque, un bord de fuite, opposé au bord d'attaque, un premier et un deuxième profils, s'étendant chacun entre le bord d'attaque et le bord de fuite, ladite au moins une ouverture du conduit étant sur l'un des premier et deuxième profils, ladite au moins une ouverture étant configurée de sorte qu'un flux d'air sortant de l'ouverture s'écoule le long d'au moins une portion dudit un des premier et deuxième profils,
- ladite au moins une ouverture est une fente s'étendant selon au moins 90% de la longueur de chaque conduit,
- ladite au moins une ouverture est délimitée par des lèvres dont l'écartement est compris entre 0,5 mm et 2 mm,
- deux conduits adjacents sont disposés en regard l'un de l'autre de sorte que les ouvertures sont pratiquées dans les profils se faisant face,
- ledit au moins un conduit comporte une première ouverture débouchant dans le premier profil et une deuxième ouverture débouchant dans le deuxième profil.

L'invention a également pour objet un module d'échange de chaleur pour véhicule automobile, comprenant un dispositif de ventilation tel que décrit précédemment, et un échangeur de chaleur, le dispositif de ventilation et l'échangeur de chaleur étant positionnés l'un relativement à l'autre de sorte qu'un flux d'air mis en mouvement par le dispositif de ventilation alimente en air l'échangeur de chaleur.

On va maintenant présenter des modes de réalisation de l'invention donnés à titre d'exemples non limitatifs et à l'appui des figures annexées sur lesquelles :
- la figure 1 est une représentation schématique vue de dessus d'un véhicule automobile ;
- la figure 2 est une vue en perspective d'un dispositif de ventilation selon un premier mode de réalisation de l'invention en position fermée ;
- la figure 3 est une vue partielle de la figure 2, le dispositif étant coupé selon le plan III-III ;
- la figure 4 est une vue en perspective du dispositif de la figure 2 en position ouverte ;
- la figure 5 est une vue partielle de la figure 4, le dispositif étant coupé le plan V-V de la figure 4 ;
- la figure 6 est une vue schématique en coupe de tubes aérodynamiques selon le premier mode de réalisation et d'un échangeur de chaleur;
- la figure 7 est une vue schématique en perspective de tubes aérodynamiques selon le premier mode de réalisation et d'un échangeur de chaleur;
- la figure 8 est une vue schématique en perspective de tubes aérodynamiques et d'un échangeur de chaleur selon un deuxième mode de réalisation de l'invention ; et
- la figure 9 illustre un tube aérodynamique selon une variante de réalisation de l'invention.

Sur les différentes figures, les éléments identiques ou similaires portent les mêmes références. La description de leur structure et de leur fonction n'est donc pas systématiquement reprise.

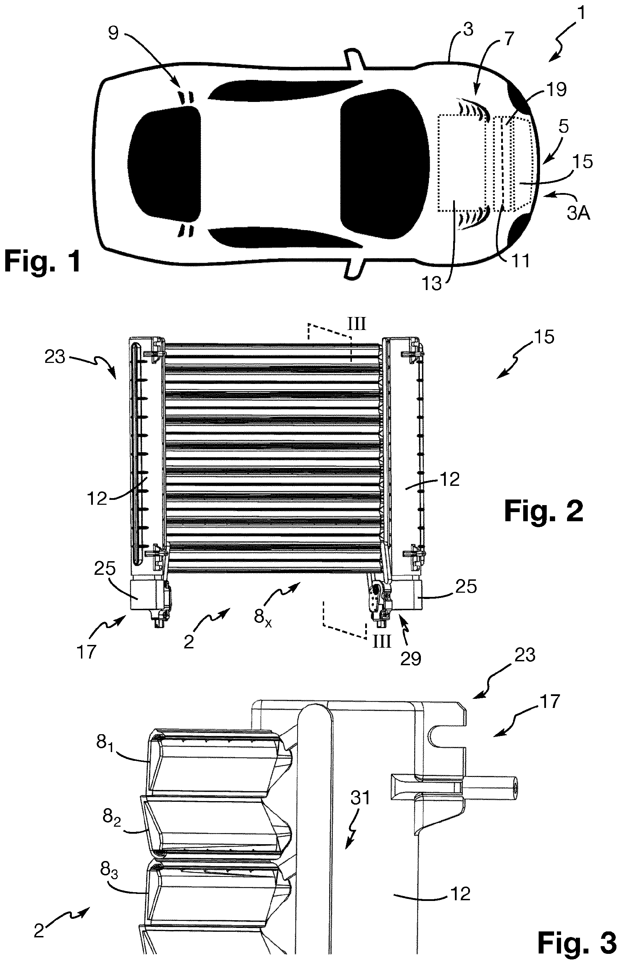

Comme illustré à la figure 1, un véhicule automobile 1 comporte une carrosserie 3 munie d'au moins une bouche d'admission 5, 7, 9 pour alimenter en air, lors du déplacement du véhicule automobile 1, un (ou plusieurs) dispositif(s) thermique(s) 11 comportant par exemple au moins un échangeur de chaleur 19. Comme expliqué ci-dessus, la bouche d'admission 5, généralement appelée calandre, est la plus répandue et forme une ouverture sur la face avant 3A du véhicule automobile 1. C'est pourquoi, l'explication ci-dessous sera faite à partir de cette bouche d'admission 5.

Bien entendu, suivant la localisation du moteur 13 et/ou du dispositif thermique 11 dans le véhicule automobile 1, on comprend que l'invention s'appliquerait avec les mêmes résultats et mêmes avantages sur d'autres bouches d'admission telles que celles 7 et 9 illustrées à la figure 1 respectivement localisée sur le capot et les ailes arrière.

L'invention se rapporte à un dispositif de ventilation 15 notamment destiné à être monté entre une bouche d'admission 5 d'air, qui, comme cela sera mieux expliqué ci-dessous, n'est pas un groupe moto-ventilateur généralement utilisé pour les véhicules automobiles.

En effet, avantageusement selon l'invention, le dispositif de ventilation ne comporte pas d'hélice pour générer un flux d'air forcé, c'est-à-dire y compris en l'absence de déplacement du véhicule automobile.

L'invention a également pour objet un module d'échange thermique comprenant le dispositif de ventilation 15 et un dispositif thermique 11.

Ainsi, le dispositif thermique 11 peut comporter au moins un échangeur de chaleur 19 comme, par exemple, celui utilisé pour la climatisation de l'habitacle, celui utilisé pour le refroidissement du moteur 13, celui utilisé pour le refroidissement d'accumulateurs électriques, celui utilisé pour le refroidissement des circuits électroniques de puissance ou encore celui utilisé pour le refroidissement de l'air de suralimentation du turbocompresseur du moteur 13.

Le dispositif de ventilation 15 et le dispositif thermique 11 sont positionnés l'un relativement à l'autre de sorte que le dispositif de ventilation 15 alimente en air le ou les échangeurs de chaleur du dispositif thermique 11.

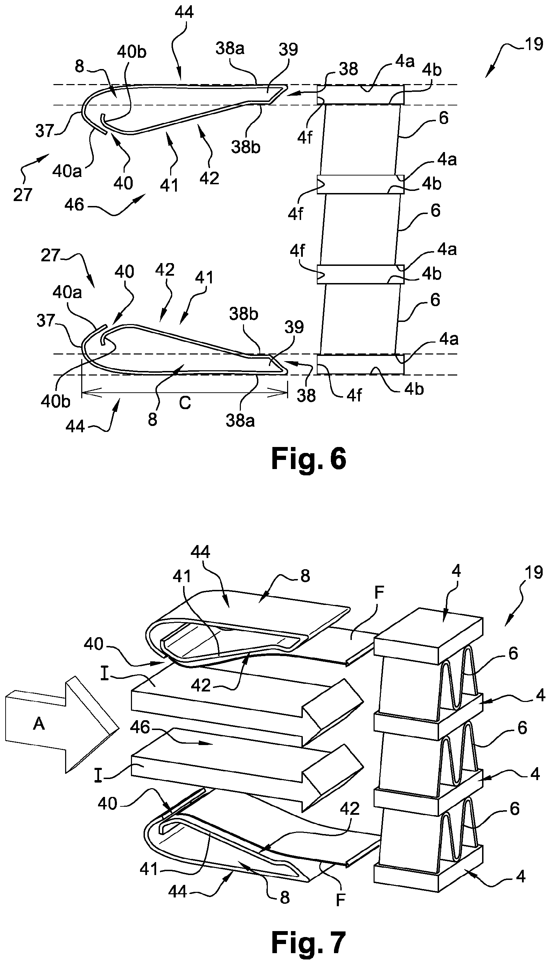

Comme illustré aux figures 6 et 7, un échangeur de chaleur 19 comprend des tubes caloporteurs 4 qui acheminent un fluide comme de l'eau, du liquide de refroidissement ou un fluide frigorigène ou de l'air par pompage. Généralement, les tubes caloporteurs 4 sont sensiblement rectilignes, parallèles entre eux de manière à former une rangée et s'étendent selon la largeur ou la hauteur du véhicule automobile 1.

De façon classique dans un échangeur de chaleur 19 de véhicule automobile, chaque tube caloporteur 4 a une section sensiblement oblongue délimitée par des première 4a et seconde 4b parois sensiblement planes qui sont reliées à des ailettes 6 d'échange de chaleur.

Comme visible sur les figures, le dispositif de ventilation 15 comporte principalement un dispositif de ventilation 2 et un dispositif de modification aérodynamique 17. Comme mieux visible aux figures 3, 5 et 7, le dispositif de ventilation 2 selon un premier mode de réalisation de l'invention comprend un (ou plusieurs) conduit(s) 8, qui de la même façon que les tubes caloporteurs 4, sont sensiblement rectilignes, parallèles entre eux et alignés de manière à former une rangée de tubes aérodynamiques 8. Toutefois, d'autres formes de conduit sont envisageables.

De préférence, les tubes caloporteurs 4 et les tubes aérodynamiques 8 sont tous parallèles entre eux. Ainsi, les rangées de tubes aérodynamiques 8 et de tubes caloporteurs 4 sont elles-mêmes parallèles. En outre, les tubes aérodynamiques 8 sont disposés de sorte que chacun d'entre eux se trouve en vis-à-vis d'un tube caloporteur 4.

Le nombre de tubes aérodynamiques 8 est adapté au nombre de tubes caloporteurs 4. Par exemple, pour un échangeur de chaleur 19 classique, le dispositif de ventilation 2 pourra comprendre par exemple entre 10 à 70 tubes aérodynamiques 8, de préférence entre 15 et 25 tubes aérodynamiques 8 pour un échangeur de chaleur comportant entre 40 et 70 tubes caloporteurs 4.

Afin de limiter le volume occupé par l'ensemble composé de l'échangeur de chaleur 19 et du dispositif de ventilation 2, tout en obtenant des performances d'échange de chaleur similaires à celle d'un dispositif de ventilation à hélice, on dispose la rangée de tubes aérodynamiques 8 à une distance inférieure à 100 mm de la rangée de tubes caloporteurs 4, cette distance étant de préférence comprise entre 10 mm et 50 mm.

De plus, on s'assurera que la hauteur de la rangée de tubes aérodynamiques 8 soit, de préférence, sensiblement égale ou inférieure à celle de la hauteur de la rangée de tubes caloporteurs 4. Par exemple, la hauteur de la rangée de tubes caloporteurs 4 étant de 400 mm, on s'assurera que la hauteur de la rangée de tubes aérodynamiques 8 soit sensiblement égale ou inférieure à cette valeur.

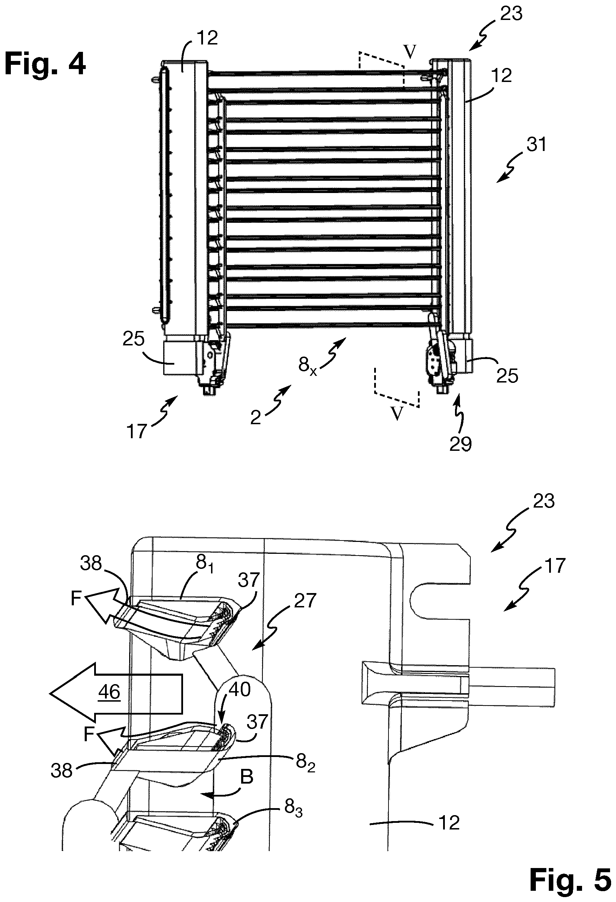

Le dispositif de ventilation 2 comprend en outre des moyens d'aspiration 23 d'air destinés à alimenter en air le creux des tubes aérodynamiques 8. Ces moyens d'aspiration 23 comprennent préférentiellement deux collecteurs 12, disposés à deux extrémités opposées du dispositif de ventilation 2. En effet, comme visible aux figures 2 et 4, les tubes aérodynamiques 8 sont, préférentiellement, reliés à chacune de leurs extrémités à un des collecteurs 12 afin d'homogénéiser la ventilation de chacun des tubes aérodynamiques 8. De préférence, chaque collecteur 12 est réalisé en aluminium, en matériau polymère ou en polyamide, de préférence en PA66.

Pour des raisons de simplification de fabrication et de compactage, les collecteurs 12 pourraient également être utilisés pour le fluide des tubes caloporteurs 4, on a alors un collecteur dit « bi-fluide ».. La circulation de fluide dans un échangeur de chaleur de véhicule automobile étant très connue, elle ne sera pas d'avantage décrite ci-dessous.

Comme illustrés aux figures 2 et 4, les moyens d'aspiration 23 d'air comportent, pour chaque collecteur 12, une turbomachine 25 intégrée à son collecteur 12 d'air associé. La turbomachine peut être un ventilateur du type centrifuge, axial, hélicoïdal ou tout autre type de ventilateur compact. Alternativement, il est également possible de déporter la turbomachine 25 de son collecteur 12 ou même ainsi qu'une turbomachine 25 unique soit déportée pour alimenter les deux collecteurs 12.

Dans l'exemple illustré aux figures 3 et 5 à 7, on peut voir que chaque tube aérodynamique 8 possède une section comprenant un bord d'attaque 37 libre sensiblement parabolique à partir duquel partent un premier profil 42 et un second profil 44 pour se rejoindre au niveau d'un bord de fuite 38 disposé en regard d'un échangeur de chaleur 19 du dispositif thermique 11. La forme des tubes aérodynamiques 8 permet, de manière avantageuse, une fabrication qui peut être obtenue, par exemple, par pliage d'une feuille métallique tel qu'à base d'aluminium ou par impression métallique ou plastique en trois dimensions. Dans le cas de matière plastique, les tubes aérodynamiques peuvent être fabriqués par moulage surmoulage ou tout autre procédé de fabrication avec matière plastiques.

A titre d'exemple nullement limitatif, la corde c de la section, ou encore la largeur du tube aérodynamique 8, peut être comprise entre 30 mm et 50 mm. Par ailleurs, le bord d'attaque 37 peut comporter une hauteur comprise entre 10 mm et 20 mm.

A ces figures 3 et 5 à 7, on peut voir que chaque tube aérodynamique 8 comporte au moins une ouverture 40 pratiquée à proximité du bord d'attaque 37 qui forme des moyens de projection 27 d'air du dispositif de ventilation 2. Comme mieux expliqué ci-dessous, ladite au moins une ouverture et ledit profil de chaque tube aérodynamique 8 sont agencés pour que l'air projeté F depuis chaque ouverture 40 entraine une partie I de l'air présent A autour de chaque ouverture 40 afin de créer le flux d'air 46 du dispositif de ventilation 2.

Plus précisément, ladite au moins une ouverture 40 est configurée de sorte que de l'air acheminé par les moyens 23 d'aspiration d'air dans le creux du tube aérodynamique 8, soit éjecté à travers ladite au moins une ouverture 40. A cet effet, chaque ouverture 40 est disposée en regard de l'échangeur de chaleur 19. Ainsi, chaque ouverture 40 est disposée en vis-à-vis de la paroi frontale 4f reliant les première 4a et seconde 4b parois planes d'un tube caloporteur 4 correspondant. De préférence, chaque ouverture 40 est configurée de sorte que le flux d'air 46 soit éjecté de façon sensiblement perpendiculaire à la direction de la longueur des tubes aérodynamiques 8.

On note que chaque ouverture 40 est distincte des extrémités du tube aérodynamique 8.

On note également que chaque ouverture 40 est située à l'extérieur du ou des collecteur(s) 12.

Préférentiellement selon l'invention, chaque ouverture est en forme de fente permettant de constituer un flux d'air 46 de grandes dimensions en direction de l'échangeur de chaleur 19 sans trop réduire la résistance mécanique des tubes aérodynamiques 8. Par conséquent, pour obtenir un passage d'air le plus grand possible, les ouvertures 40 s'étendent avantageusement sur une grande partie de la longueur des tubes aérodynamiques 8, de préférence sur au moins 90%.

Comme mieux visible aux figures 5 à 7, chaque ouverture 40 est délimitée par des lèvres distale 40a et proximale 40b. La lèvre distale 40a est une prolongation du bord d'attaque 37 alors que la lèvre proximale 40b est une prolongation d'une partie courbe du profil 42. A titre d'exemple, l'épaisseur de l'ouverture 40, c'est-à-dire la distance séparant lèvres distale 40a et proximale 40b, peut comprise entre 0,5 mm et 2 mm.

Ainsi dans le premier mode de réalisation de l'invention dans lequel les tubes aérodynamiques 8 ne comportent qu'une ouverture 40, les tubes aérodynamiques 8 fonctionnent par paire de tubes aérodynamiques 8 identiques mais orientés différemment. Préférentiellement selon le premier mode de réalisation, chaque tube aérodynamique 8 d'une paire est symétrique par rapport au flux d'air 46 souhaité du dispositif de ventilation 2, c'est-à-dire de symétrie axiale dite « miroir » par rapport au flux d'air 46. Dans le premier mode de réalisation illustré aux figures 5 à 7, chaque ouverture 40 débouche sur le profil 42 de la section, les profils 42 d'une paire se faisant vis-à-vis. Bien entendu, l'ouverture 40 peut indifféremment déboucher soit sur le profil 44 soit sur le profil 42.

Ainsi, les flux d'air F éjectés par les ouvertures 40 s'écoulent au moins en partie le long d'une portion de surface tube, par effet Coanda, créant ainsi un flux d'air 46 dans lequel une partie induite I de l'air ambiant A est entraîné comme illustré sur les figures 5 et 7. On rappelle que l'effet Coand 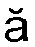 est un effet aérodynamique se traduisant par le fait qu'un fluide s'écoulant le long d'une surface à faible distance de celle-ci a tendance à l'affleurer, voire à être entraîné.

Tirant parti de cet effet, l'invention permet, grâce à l'entraînement de l'air ambiant A dans le flux d'air 46 ainsi créé, d'obtenir un débit d'air envoyé vers l'échangeur de chaleur 19 du dispositif thermique 11 sensiblement identique à celui généré par un ventilateur à hélice classique mais en consommant moins d'énergie. En effet, le flux d'air 46 du dispositif de ventilation 2 est la somme du flux d'air F éjecté par les ouvertures 40 et de celui I de l'air ambiant A entraîné.

Dans le premier mode de réalisation visible à la figure 6, le bord de fuite 38 de chaque tube aérodynamique 8 comprend une portion de bord de fuite 39 délimitée par une première paroi de bord de fuite 38a et une seconde paroi de bord de fuite 38b sensiblement parallèles. En effet, afin d'optimiser la ventilation, la distance entre la première paroi de bord de fuite 38a et la seconde paroi de bord de fuite 38b est agencée pour correspondre à la hauteur de la face frontale 4f d'un tube caloporteur 4 comme visualisé en traits interrompus sur la figure 6. On comprend que le flux d'air 46 peut ainsi traverser un maximum de surface des ailettes 6 pour optimiser l'échange de chaleur. Bien entendu, il peut être envisagé d'autres types de bord de fuite 38.

Dans le premier mode de réalisation de l'invention, deux rangs de tubes caloporteurs 4 et trois rangs d'ailettes 6 sont contenus dans le volume délimité par les deux tubes aérodynamiques 8 d'une même paire. Bien entendu, le nombre de chaque rang ne saurait se limiter à deux et trois. Ainsi, le flux d'air 46 entre les deux tubes aérodynamiques 8 pourrait faire face à plus ou moins de deux rangs de tubes caloporteurs 4 et/ou plus ou moins de trois rangs d'ailettes 6. A titre d'exemple, il est donc envisageable que l'espace les deux tubes aérodynamiques 8 ventile un unique rang d'ailettes 6.

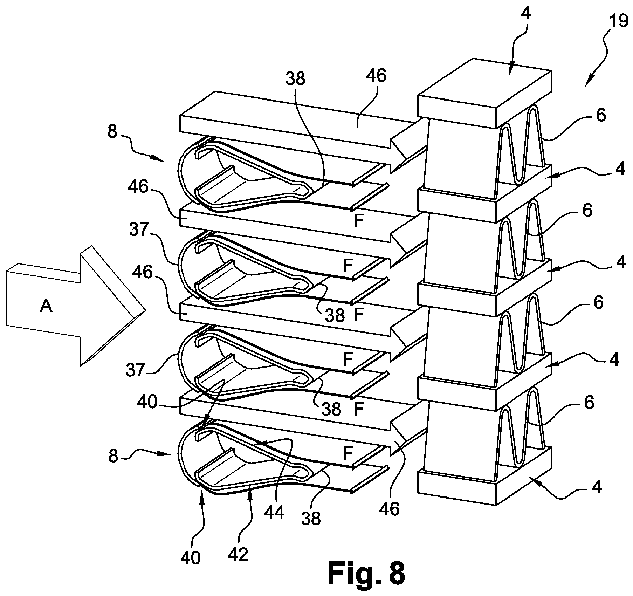

Selon un deuxième mode de réalisation de l'invention illustré à la figure 8, les tubes aérodynamiques 8 comportent chacun deux ouvertures 40. Ce deuxième mode de réalisation est particulièrement avantageux pour maximiser le flux d'air 46 du dispositif de ventilation 2. En effet, comme visible à la figure 5, entre chaque paire de tubes aérodynamiques 8 en position ouverte dans le premier mode de réalisation, on remarque un interstice B dans lequel aucune ventilation n'est présente. Cet interstice B forme par conséquent une zone « morte ».

Avantageusement selon l'invention, le deuxième mode de réalisation propose donc de souffler aussi bien sur le profil 42 que sur le profil 44 afin qu'il n'y ait aucune zone « morte ». Comme visible à la figure 8, la section de chaque tube aérodynamique 8 est sensiblement symétrique par rapport à la largeur du tube aérodynamique 8. On comprend notamment que les profils 42 et 44 offrent des courbures symétriques suivant une symétrie axiale dite « miroir » par rapport à la largeur du tube aérodynamique 8.

Selon le deuxième mode de réalisation, une première ouverture 40 débouche donc sur le premier profil 42 et, une deuxième ouverture 40, sur le profil 44. Ces ouvertures 40 sont analogues à celles du premier mode de réalisation avec les mêmes résultats et avantages. Par conséquent, comme visible à la figure 8, le flux d'air 46 entraînant l'air ambiant A est créé entre chaque tube aérodynamique 8 adjacent et non plus uniquement entre chaque paire comme dans le premier mode de réalisation.

Quel que soit le mode de réalisation de tubes aérodynamiques 8, le dispositif 15 comporte en outre un dispositif de modification aérodynamique 17 destiné à sélectivement modifier l'inclinaison de tout ou partie des tubes aérodynamiques 8 du dispositif 15 entre une position ouverte illustrée à la figure 4 et une position fermée illustrée à la figure 2.

Plus précisément, au moins l'un des tubes 8 est monté orientable entre une position fermée et une position ouverte, le dispositif de ventilation étant configuré pour laisser passer plus d'air dans la position ouverte que dans la position fermée

Dans la position fermée, il existe un espace entre le tube orientable et son ou ses tube(s) aérodynamique(s) voisin(s) qui est inférieur à un espace entre le tube orientable et et son ou ses tube(s) aérodynamique(s) voisin(s) dans la position ouverte.

Sur les modes de réalisation illustrés, tous les tubes 8 sont montés pivotants.

Sur les modes de réalisation illustrés, les tubes 8 sont positionnés les uns relativement aux autres de sorte à bloquer un flux d'air en position fermée, et de sorte à laisser circuler un flux d'air en position ouverte.

Ainsi, le dispositif de ventilation selon l'invention présente une fonction d'obturation d'arrivée d'air et une fonction de ventilation des échangeurs dans un espace compact permettant une meilleure gestion thermique d'un véhicule automobile, puisque la grille est soufflante.

Selon l'orientation des tubes, le dispositif permet d'ajuster le débit d'air qui arrive à l'échangeur de chaleur, ce qui permet également d'optimiser l'efficacité de l'échangeur de chaleur.

La position fermée est particulièrement avantageuse quand le véhicule circule, notamment à grande vitesse, puisque, dans cette position, le coefficient de trainée du véhicule est réduit, et son aérodynamisme amélioré.

La position ouverte est particulièrement avantageuse quand le véhicule est à l'arrêt, puisque, dans cette position, l'aération du compartiment moteur est améliorée.

Dans l'exemple illustré aux figures 2 à 5, le dispositif de modification aérodynamique 17 utilise les collecteurs 12 comme châssis entre lesquels sont installés dix-huit tubes aérodynamiques 8.

On remarque que, dans la position ouverte du dispositif de modification aérodynamique 17 illustrée aux figures 4 et 5, les tubes aérodynamiques 8ₓ, 8₁, 8₂, 8₃ forment des lames sensiblement parallèles à la manière d'une jalousie. De manière inverse, dans la position fermée du dispositif de modification aérodynamique 17 illustrée aux figures 2 et 3, les tubes aérodynamiques 8ₓ, 8₁, 8₂, 8₃ forment des lames obliques, les lames adjacentes étant en contact entre elles pour bloquer tout passage d'air.

Préférentiellement, le dispositif de modification aérodynamique 17 comportent des moyens de déplacement 29 destinés à pivoter tout ou partie des dix-huit tubes aérodynamiques 8X entre les collecteurs 12. En effet, suivant les fonctions et/ou la gestion thermique et/ou la gestion aéraulique du véhicule automobile 1, il peut être piloté la fermeture partielle ou totale d'un (ou de plusieurs) tube(s) aérodynamique(s) 8ₓ à partir d'une position ouverte ou, inversement, l'ouverture partielle ou totale d'un (ou de plusieurs) tube(s) aérodynamique(s) 8ₓ à partir d'une position fermée pour piloter finement l'apport d'air généré par le déplacement du véhicule automobile 1 additionné, ou non, par celui généré par le dispositif de ventilation 2 en maintenant un écoulement sensiblement homogène vers le dispositif thermique 11.

Comme illustré aux figures 2 à 5, les moyens 29 peuvent comporter une tringlerie 31 munie d'au moins un bras et d'au moins une tringle, qui est associée à un actionneur mécanique, électrique ou encore pneumatique.

Par ailleurs, les tubes aérodynamiques 8ₓ ont des surfaces, des épaisseurs, des géométries adaptées et sont réalisés dans des matériaux capables de résister à la pression de l'air due à la vitesse du véhicule 1, éventuellement additionnée à une vitesse de vent de face, notamment lorsque les tubes aérodynamiques 8ₓ sont en position fermée comme illustré aux figures 2 et 3.

Par conséquent, le dispositif 15 selon l'invention permet une optimisation de la gestion thermique des échangeurs de chaleur 19 du dispositif thermique 11 en comparaison de l'utilisation d'une hélice classique dont les moyens de motorisation consomment beaucoup d'énergie.

De plus, le dispositif de modification aérodynamique 17 étant intégré aux tubes aérodynamiques 8ₓ du dispositif de ventilation 2, il n'est plus nécessaire d'utiliser des échangeurs 19 de chaleur munis d'une hélice de ventilation. Le dispositif 15 selon l'invention occupe donc un volume inférieur à une hélice de ventilation avec de surcroît une fonction d'obturation sélective en plus.

On comprend également que le dispositif 15 permet avantageusement de proposer un écoulement laminaire grâce aux tubes aérodynamiques 8ₓ, contrairement à une hélice dont les pales génèrent un écoulement turbulent.

En outre, le dispositif 15 laisse totalement libre, en position ouverte du dispositif de modification aérodynamique 17, l'écoulement de l'air ambiant vers les tubes 4 et les ailettes 6 du dispositif thermique 11 lorsque le dispositif de ventilation 2 est éteint, contrairement à une hélice classique dont les pales immobiles limitent le débit d'air.

Enfin, le dispositif 15 offre la possibilité de localiser l'air projeté du dispositif de ventilation 2 grâce au basculement sélectif des tubes aérodynamiques 8ₓ ce qui permet de n'offrir une ventilation que pour certaines parties des échangeurs de chaleur 19, comme, par exemple, celui utilisé pour la climatisation de l'habitacle, celui utilisé pour le refroidissement du moteur 13, celui utilisé pour le refroidissement d'accumulateurs électriques, celui utilisé pour le refroidissement des circuits électroniques de puissance ou encore celui utilisé pour le refroidissement de l'air de suralimentation du turbocompresseur du moteur 13.

Par conséquent, à titre d'exemple nullement limitatif, avantageusement selon l'invention, au démarrage, tout ou partie des tubes aérodynamiques 8ₓ peuvent être en position fermée pour permettre de bloquer l'arrivée d'air sur les échangeurs de chaleur 19 du dispositif thermique 11 pour que le moteur 13 chauffe plus vite afin de diminuer la consommation de carburant. Lorsque le véhicule automobile est en déplacement, tous les tubes aérodynamiques 8ₓ peuvent être en position ouverte et, éventuellement, le dispositif de ventilation 2 actif, pour permettre de guider l'air induit par le déplacement du véhicule automobile sur les échangeurs de chaleur 19 du dispositif thermique 11. Lorsque le véhicule automobile 1 est immobile avec le moteur 13 en fonctionnement, tous les tubes aérodynamiques 8ₓ peuvent être en position ouverte et le dispositif de ventilation 2 actif pour permettre de maximiser le flux d'air 46 sur les échangeurs de chaleur 19 du dispositif thermique 11. Enfin, au-dessus d'une vitesse prédéterminée comme, par exemple, 100 km.h⁻¹, tous les tubes aérodynamiques 8ₓ peuvent être en position fermée afin d'améliorer leur aérodynamisme et de diminuer la consommation de carburant.

Les tubes aérodynamiques 8 sont avantageusement réalisés en aluminium.

Dans ce cas, le dispositif de ventilation est obtenu par brasage.

Selon une autre variante, les tubes aérodynamiques 8 sont réalisés en un matériau plastique, tel que du polyamide (PA).

Dans ce cas, le dispositif de ventilation est avantageusement obtenu par injection plastique.

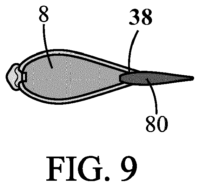

Selon une variante de réalisation illustrée sur la figure 9, le dispositif de ventilation comprend une lèvre 80 surmoulée sur au moins un tube aérodynamique, voire sur chaque tube aérodynamique 8.

La lèvre 80 est réalisée en caoutchouc.

Comme visible sur la figure 9, la lèvre 80 est surmoulée sur le bord de fuite 38 du tube aérodynamique associé 8.

La lèvre 80 est configurée pour, dans la position fermée du tube pivotant 8, venir au contact d'un tube pivotant voisin, permettant ainsi d'assurer une étanchéité entre les tubes pivotants 8 en position fermée.

L'invention n'est pas limitée aux modes de réalisation présentés et d'autres modes de réalisation apparaîtront clairement à l'homme du métier. Il est notamment possible, suivant le type de bouche d'admission 5, 7, 9 (localisation sur la carrosserie, forme de l'ouverture, etc.), le type de dispositif thermique 11 (type d'échangeur de chaleur 19, forme d'échangeur de chaleur 19, etc.), le type de dispositif de modification aérodynamique 17 (plus ou moins de tubes aérodynamiques 8ₓ, type de collecteur 12, etc.) et le dispositif de ventilation 2 (type de moyens 23 d'aspiration, etc.), que la géométrie et le nombre des tubes aérodynamiques 8ₓ puissent être adaptés sans sortir du cadre de l'invention.

Les tubes aérodynamiques 8ₓ des premier et deuxième modes de réalisation pourraient être combinés. Ainsi, à titre d'exemple, des tubes aérodynamiques 8ₓ du deuxième mode de réalisation pourraient être intercalés entre une paire de tubes aérodynamiques 8ₓ du premier mode de réalisation.

Il est également envisageable que tout ou partie du creux des tubes aérodynamiques 8ₓ des premier et deuxième modes de réalisation comprenne des moyens de guidage de l'air acheminé vers le (ou les) ouverture(s) 40. En effet, le flux d'air s'écoule dans le creux du tube aérodynamique 8ₓ selon la longueur du tube aérodynamique 8ₓ. Ces moyens de guidage permettraient de faciliter la déviation du flux d'air afin qu'il se dirige vers le (ou les) ouverture(s) 40. A titre d'exemple, ces moyens de guidage pourraient prendre la forme d'un (ou plusieurs) déflecteur(s) venu(s) de matière avec le tube aérodynamique 8ₓ associé.

On note qu'avantageusement, au moins deux tubes aérodynamiques 8 sont montés orientables et sont configurés pour être passés en position fermée et en position ouverte indépendamment l'un de l'autre.

Par exemple, les deux volets orientables sont commandés par deux actionneurs ou tringleries distincts.

De préférence, il est possible de prévoir plusieurs groupes de volets, les volets d'un même groupe se déplaçant simultanément, tandis que les groupes pivotent indépendamment les uns des autres.

Ainsi, il est possible de sélectionner certains volets pour gérer le flux d'air et cibler l'aération de certaines zones du compartiment moteur du véhicule.

On note également que le dispositif de ventilation selon la présente invention peut être disposé en face avant du véhicule automobile, afin de gérer l'air pénétrant dans le véhicule automobile.

## Revendications

1. Dispositif de ventilation destiné à générer un flux d'air en direction d'un échangeur de chaleur (1) de véhicule automobile, comprenant :
- des conduits (8) espacés les uns des autres,
- au moins un collecteur d'air (12) comportant des orifices, chaque conduit débouchant par une de ses extrémités dans un orifice distinct du collecteur d'air,
chaque conduit (8) étant muni d'au moins une ouverture (40) pour éjecter un flux d'air traversant ledit conduit, l'ouverture étant distincte de ses extrémités et située à l'extérieur du collecteur d'air (12), ledit dispositif de ventilation étant **caractérisé en ce que**
au moins un conduit étant monté orientable entre une position fermée et une position ouverte, le dispositif étant configuré pour laisser passer plus d'air dans la position ouverte que dans la position fermée.

2. Dispositif selon la revendication précédente, dans lequel au moins deux conduits (8) sont montés orientables et sont configurés pour être passés en position fermée et en position ouverte indépendamment l'un de l'autre.

3. Dispositif selon la revendication 1 ou 2, dans lequel tous les conduits (8) sont montés orientables.

4. Dispositif selon la revendication précédente, dans lequel les conduits (8) sont positionnés les uns relativement aux autres de sorte à bloquer un flux d'air en position fermée, et de sorte à laisser circuler un flux d'air en position ouverte.

5. Dispositif selon l'une des revendications précédentes, dans lequel les conduits (8, 8ₓ, 8₁, 8₂, 8₃) sont des tubes sensiblement rectilignes, parallèles entre eux et alignés de manière à former une rangée de tubes (8).

6. Dispositif selon l'une des revendications précédentes, comprenant des moyens (17, 29) de commande d'orientation de chaque conduit orientable (8).

7. Dispositif selon la revendication précédente, dans lequel les moyens de commande comprennent un actionneur et/ou une tringlerie.

8. Dispositif de ventilation selon l'une des revendications précédentes, dans lequel chaque conduit (8) présente une section comprenant :
- un bord d'attaque (37),
- un bord de fuite (38), opposé au bord d'attaque (37),
- un premier et un deuxième profils (42, 44), s'étendant chacun entre le bord d'attaque (37) et le bord de fuite (38),
ladite au moins une ouverture (40) du conduit (8) étant sur l'un des premier et deuxième profils (42, 44), ladite au moins une ouverture (40) étant configurée de sorte qu'un flux d'air sortant de l'ouverture (40) s'écoule le long d'au moins une portion dudit un des premier et deuxième profils (42, 44).

9. Dispositif selon l'une des revendications précédentes, comprenant en outre, sur au moins un conduit (8), une lèvre (80) surmoulée configurée pour, dans la position fermée, venir au contact d'un conduit voisin.

10. Module d'échange de chaleur pour véhicule automobile, comprenant un dispositif de ventilation selon l'une des revendications précédentes, et un échangeur de chaleur, le dispositif de ventilation et l'échangeur de chaleur étant positionnés l'un relativement à l'autre de sorte qu'un flux d'air mis en mouvement par le dispositif de ventilation alimente en air l'échangeur de chaleur.

## Patentansprüche

1. Belüftungsvorrichtung, welche dazu bestimmt ist, einen Luftstrom in Richtung eines Wärmetauschers (1) eines Kraftfahrzeugs zu erzeugen, und umfasst:
- Leitungen (8), die voneinander beabstandet sind,
- mindestens einen Luftsammler (12), der Durchlässe aufweist, wobei jede Leitung mit einem ihrer Enden in einen anderen Durchlass des Luftsammlers mündet,
wobei jede Leitung (8) mit mindestens einer Öffnung (40) zum Ausstoßen eines Luftstroms, der die Leitung durchströmt, versehen ist, wobei die Öffnung von ihren Enden verschieden ist und sich außerhalb des Luftsammlers (12) befindet,
wobei die Belüftungsvorrichtung **dadurch gekennzeichnet ist, dass** mindestens eine Leitung zwischen einer geschlossenen Position und einer offenen Position orientierbar angebracht ist, wobei die Vorrichtung dafür ausgelegt ist, in der offenen Position mehr Luft als in der geschlossenen Position durchströmen zu lassen.

2. Vorrichtung nach dem vorhergehenden Anspruch, wobei mindestens zwei Leitungen (8) orientierbar angebracht sind und dafür ausgelegt sind, unabhängig voneinander in die geschlossene Position und in die offene Position gebracht zu werden.

3. Vorrichtung nach Anspruch 1 oder 2, wobei alle Leitungen (8) orientierbar angebracht sind.

4. Vorrichtung nach dem vorhergehenden Anspruch, wobei die Leitungen (8) relativ zueinander so positioniert sind, dass sie in der geschlossenen Position einen Luftstrom blockieren und in der offenen Position einen Luftstrom durchströmen lassen.

5. Vorrichtung nach einem der vorhergehenden Ansprüche, wobei die Leitungen (8, 8ₓ, 8₁, 8₂, 8₃) Rohre sind, die im Wesentlichen gerade und zueinander parallel sind und so ausgerichtet sind, dass sie eine Reihe von Rohren (8) bilden.

6. Vorrichtung nach einem der vorhergehenden Ansprüche, welche Mittel (17, 29) zur Steuerung der Orientierung jeder orientierbaren Leitung (8) umfassen.

7. Vorrichtung nach dem vorhergehenden Anspruch, wobei die Mittel zur Steuerung einen Stellantrieb und/oder ein Gestänge umfassen.

8. Belüftungsvorrichtung nach einem der vorhergehenden Ansprüche, wobei jede Leitung (8) einen Querschnitt aufweist, welcher umfasst:
- eine Vorderkante (37),
- eine Hinterkante (38), die der Vorderkante (37) gegenüberliegt,
- ein erstes und ein zweites Profil (42, 44), die sich jeweils zwischen der Vorderkante (37) und der Hinterkante (38) erstrecken,
wobei sich die mindestens eine Öffnung (40) der Leitung (8) an einem von dem ersten und dem zweiten Profil (42, 44) befindet, wobei die mindestens eine Öffnung (40) so ausgebildet ist, dass ein Luftstrom, der aus der Öffnung (40) austritt, an mindestens einem Abschnitt des einen von dem ersten und dem zweiten Profil (42, 44) entlangströmt.

9. Vorrichtung nach einem der vorhergehenden Ansprüche, welche außerdem auf mindestens einer Leitung (8) eine aufgeformte Lippe (80) umfasst, die dafür ausgelegt ist, in der geschlossenen Position mit einer benachbarten Leitung in Kontakt zu kommen.

10. Wärmetauschmodul für ein Kraftfahrzeug, welches eine Belüftungsvorrichtung nach einem der vorhergehenden Ansprüche und einen Wärmetauscher umfasst, wobei die Belüftungsvorrichtung und der Wärmetauscher so relativ zueinander positioniert sind, dass ein Luftstrom, der von der Belüftungsvorrichtung in Bewegung gesetzt wird, den Wärmetauscher mit Luft versorgt.

## Claims

1. Ventilation device intended to generate an air flow in the direction of a motor vehicle heat exchanger (1), comprising:
- spaced-apart ducts (8),
- at least one air manifold (12) having orifices, each duct leading at one of its ends into a separate orifice of the air manifold,
each duct (8) being provided with at least one opening (40) for ejecting an air flow passing through said duct, the opening being separate from the ends thereof and situated outside the air manifold (12),
said ventilation device being **characterized in that** at least one duct being mounted so as to be orientable between a closed position and an open position, the device being configured to allow more air to pass through in the open position than in the closed position.

2. Device according to the preceding claim, wherein at least two ducts (8) are mounted in an orientable manner and are configured to be transferred into the closed position and into the open position independently of one another.

3. Device according to Claim 1 or 2, wherein all the ducts (8) are mounted in an orientable manner.

4. Device according to the preceding claim, wherein the ducts (8) are positioned relative to one another so as to block an air flow in the closed position and so as to allow an air flow to circulate in the open position.

5. Device according to one of the preceding claims, wherein the ducts (8, 8ₓ, 8₁, 8₂, 8₃) are substantially rectilinear tubes that are mutually parallel and aligned so as to form a row of tubes (8).

6. Device according to one of the preceding claims, which comprises means (17, 29) for controlling the orientation of each orientable duct (8).

7. Device according to the preceding claim, wherein the control means comprise an actuator and/or a linkage.

8. Ventilation device according to one of the preceding claims, wherein each duct (8) has a section comprising:
- a leading edge (37),
- a trailing edge (38) on the opposite side from the leading edge (37),
- a first and a second profile (42, 44) that each extend between the leading edge (37) and the trailing edge (38),
said at least one opening (40) in the duct (8) being in one of the first and second profiles (42, 44), said at least one opening (40) being configured such that an air flow exiting the opening (40) flows along at least a portion of said one of the first and second profiles (42, 44).

9. Device according to one of the preceding claims, which also comprises, on at least one duct (8), an overmoulded lip (80) configured to come, in the closed position, into contact with an adjacent duct.

10. Heat exchange module for a motor vehicle, comprising a ventilation device according to one of the preceding claims and a heat exchanger, the ventilation device and the heat exchanger being positioned relative to one another such that an air flow set in motion by the ventilation device supplies the heat exchanger with air.
